(19)

Europäisches
Patentamt
European
Patent Office
Office européen
des brevets

(11) **EP 1 135 768 B1**

(12) **EUROPEAN PATENT SPECIFICATION**

(45) Date of publication and mention
of the grant of the patent:
**23.01.2008 Bulletin 2008/04**

(21) Application number: **00967788.1**

(22) Date of filing: **25.09.2000**

(51) Int Cl.:
***G10L 15/22*** *(2006.01)*

(86) International application number:
**PCT/EP2000/009385**

(87) International publication number:
**WO 2001/024161 (05.04.2001 Gazette 2001/14)**

(54) **SPELL MODE IN A SPEECH RECOGNIZER**

BUCHSTABIERMODUS IN EINEM SPRACHERKENNER

MODE DE VERIFICATION ORTHOGRAPHIQUE DANS UN SYSTEME DE RECONNAISSANCE
VOCALE

(84) Designated Contracting States:
**DE FR GB**

(30) Priority: **29.09.1999 EP 99203177**

(43) Date of publication of application:
**26.09.2001 Bulletin 2001/39**

(73) Proprietor: **Koninklijke Philips Electronics N.V.
5621 BA Eindhoven (NL)**

(72) Inventor: **BARTOSIK, Heinz, F.
NL-5656 AA Eindhoven (NL)**

(74) Representative: **van der Veer, Johannis Leendert
et al
Philips
Intellectual Property & Standards
P.O. Box 220
5600 AE Eindhoven (NL)**

(56) References cited:
**US-A- 4 914 704**

• **"Dragon Naturally Speaking Professional -
Getting Started" , DRAGON SYSTEMS
XP002156506 page 78 -page 80 idem**
• **HILD H ET AL: "INTEGRATING SPELLING INTO
SPOKEN DIALOGUE RECOGNITION"
EUROPEAN CONFERENCE ON SPEECH
COMMUNICATION AND TECHNOLOGY.
(EUROSPEECH),ES,MADRID: GRAFICAS
BRENS, vol. CONF. 4, 18 September 1995
(1995-09-18), pages 1977-1979, XP000855095**
• **PATENT ABSTRACTS OF JAPAN vol. 1999, no.
11, 30 September 1999 (1999-09-30) & JP 11
167393 A (HITACHI ENG &SERVICE CO LTD), 22
June 1999 (1999-06-22)**

**Description**

The invention relates to a speech recognition system including:

an input for receiving a signal representative of speech; and
a recognition unit for recognizing the signal and representing the recognized signal as word(s); the recognition unit including a spell mode recognizer for recognizing at least a part
of the speech signal by:

- comparing the part of the signal against a spell inventory comprising a representation of a plurality of spell reference words; and
- identifying for the part of the signal a single spell character associated with a most likely one of the spell reference words.

Such a speech recognition system is marketed by Philips under the name FreeSpeech98. This system allows a user to spell words to overcome recognition problems, which may, for instance, occur when a word is not present in the active lexicon or is miss-recognized. The user can spell by pronouncing the single characters of the alphabet. Since recognition of spoken single characters is difficult (the utterances are short and sometimes phonetically close), the known system also allows a user to spell using spell words from the international spelling alphabet "Alpha, Bravo, Charlie, ...". In the lexicon used for the spelling, the respective spell words of the international alphabet are associated with a textual representation which corresponds to the first character of the spell word. As an example, the spell word 'alpha' is linked to the textual representation 'a'. The first characters of the respective spell words of the sequence of spell words spoken by the user are then combined to form the spelled word. For instance, the name "Philips" can be spelled by pronouncing the sequence of words "Papa Hotel India Lima India Papa Sierra" if the recognizer is in the spell mode.

Although using the international alphabet enables accurate recognition of the spell words, and thus allows accurate spelling, many people are not familiar with this spelling alphabet.

It is an object of the invention to provide a system of the kind set forth with a more flexible spell mode.

To meet the object of the invention, the invention provides a system as defined in claim 1. In this way, the user is offered a choice of words to be used for spelling of a character. It will be understood that in the spell mode the system may still offer the possibility to spell by pronouncing single characters. To recognize single character words may involve using an optimized single character recognizer in addition to a recognizer suitable for recognizing multi-character spell words.

Further, at least some of the spell words are simply taken from the dictation inventory or shared among the spell inventory and the dictation inventory. The inventory of spell words may be a subset of the dictation inventory. If the spell inventory is much more limited then the dictation inventory, the accuracy of recognizing the spell word increases. Alternatively, the set of words in the inventories may even be substantially the same. This gives the user full freedom in using almost any word during spelling. The spell inventory may include certain words (or the individual spell characters), like 'Sierra' and 'Lima', which may not be present in an active dictation inventory.

Preferably, the spell words are selected under control of the user. In this way, the user can compose a preferred (and easy to remember) spell alphabet. If so, preferably the user can select at least some of the words in the spell inventory. The system may then check for a word, which the user desires to add, whether the word is sufficiently distinguished from other words, which are already in the spell inventory and start with a different character. If not, the system may issue a warning or refuse adding such a word.

US5,754,974 discloses a speech recognition system that as Philips FreeSpeech98 enables users to spell words by using the International Spelling Alphabet. The disclosed system comprises the same problem that only one multi-character spell reference word may be used for each character to be spelled.

As described in the dependent claim 3, those words which are the same in or shared among the inventories also share the same acoustic representation. As such no double administration or training is required.

As described in the dependent claim 4, the spell words may be associated with a single-character textual transcription (although the word itself is a multi-character word). In this way, identification of the most likely spell word immediately yields the single character outcome of the spelling.

As described in the dependent claim 5, the multi-character spell word starts with its associated spell character. This makes it easy for the user to remember the spell word. Moreover, this makes it easier to provide a large set of spell words to a user while at the same time being able to meet the high levels of recognition accuracy required in a spell mode. Whereas it normally is difficult to distinguish between certain words, like "cars" and "car's" or "two", "to" and "too", such words frequently start with a same character and as such do not need to be distinguished accurately in a spell mode. Advantageously, of the words most likely to have been uttered (on the so-called N-best list), it is checked which starting character occurs most frequently and/or has the highest likelihood and this character is chosen.

As described in the dependent claim 6, the multi-character spell words are associated with a corresponding multi-character textual transcription, like for instance used in the dictation mode (enabling sharing of the textual transcription).

As described in the dependent claim 7, the word mode recognizer is used in a conventional manner (i.e. generating a full textual representation of the recognized word) also in the spell mode, making the system is simpler. Only in a post-processing step it is determined whether to use the full textual representation of the word (in word mode) or only the first character (in spell mode).

As described in the dependent claim 8, the normal mode recognizer may be constrained to operate in isolated word recognition mode. This can improve the recognition accuracy.

These and other aspects of the invention will be apparent from and elucidated with reference to the embodiments shown in the drawings.

Figure 1 shows the elements of a typical speech recognition system;
Figure 2 shows two different word models;
Figure 3 illustrates a block diagram of a speech recognition system with a spell mode and word mode recognition;
Figure 4 shows sharing of the word models between the modes; and
Figure 5 shows an example of a lexicon structure.

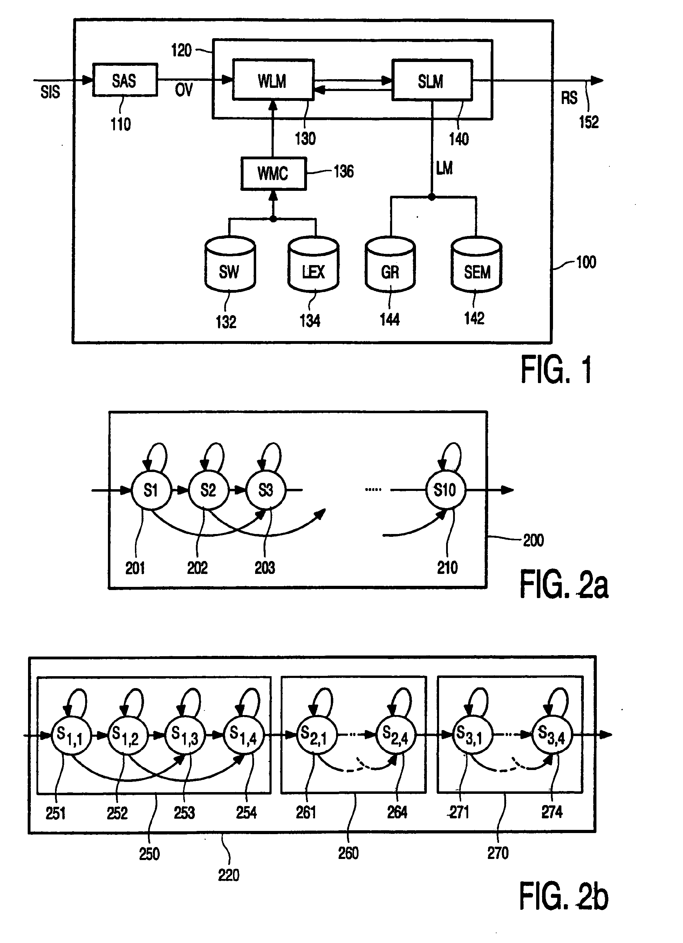

Speech recognition systems typically use a collection of recognition models to recognize an input pattern. For instance, an acoustic model and a vocabulary may be used to recognize words and a language model may be used to improve the basic recognition result. Various forms of speech recognition techniques, such as small or large vocabulary recognition and isolated or continuous recognition, are well known. Figure 1 illustrates a typical structure of a large vocabulary continuous speech recognition system 100. The system 100 comprises a spectral analysis subsystem 110 and a unit matching subsystem 120. In the spectral analysis subsystem 110 the speech input signal (SIS) is spectrally and/or temporally analyzed to calculate a representative vector of features (observation vector, OV). Typically, the speech signal is received via a microphone, digitized (e.g. sampled at a rate of 6.67 kHz.) and preprocessed, for instance by applying pre-emphasis. Consecutive samples are grouped (blocked) into frames, corresponding to, for instance, 32 msec. of speech signal. Successive frames partially overlap, for instance, 16 msec. Often the Linear Predictive Coding (LPC) spectral analysis method is used to calculate for each frame a representative vector of features (observation vector). The feature vector may, for instance, have 24, 32 or 63 components. The standard approach to large vocabulary continuous speech recognition is to assume a probabilistic model of speech production, whereby a specified word sequence $W = w_1 w_2 w_{3...} w_q$ produces a sequence of acoustic observation vectors $Y = y_1 y_2 y_{3...} y_T$. The recognition error can be statistically minimized by determining the sequence of words $w_1 w_2 w_{3...} w_q$ which most probably caused the observed sequence of observation vectors $y_1 y_2 y_{3...} y_T$ (over time t=1,..., T), where the observation vectors are the outcome of the spectral analysis subsystem 110. This results in determining the maximum a posteriori probability:

max P(W|Y), for all possible word sequences W

By applying Bayes' theorem on conditional probabilities, P(W|Y) is given by:

$$P(W|Y) = P(Y|W).P(W)/P(Y)$$

Since P(Y) is independent of W, the most probable word sequence is given by:

$$\arg \max P(Y \mid W).P(W) \text{ for all possible word sequences } W \qquad (1)$$

In the unit matching subsystem 120, an acoustic model provides the first term of equation (1). The acoustic model is used to estimate the probability P(Y|W) of a sequence of observation vectors Y for a given word string W. For a large vocabulary system, this is usually performed by matching the observation vectors against an inventory of speech recognition units. A speech recognition unit is represented by a sequence of acoustic references. Various forms of speech recognition units may be used. As an example, a whole word or even a group of words may be represented by one speech recognition unit. A word model (WM) provides for each word of a given vocabulary a transcription in a sequence of acoustic references. In most small vocabulary speech recognition systems, a whole word is represented by a speech recognition unit, in which case a direct relationship exists between the word model and the speech recognition unit. In other small vocabulary systems, for instance used for recognizing a relatively large number of words (e.g. several hundreds), or in large vocabulary systems, use can be made of linguistically based sub-word units, such as phones, diphones or syllables, as well as derivative units, such as fenenes and fenones. For such systems, a word model is given by a lexicon 134, describing the sequence of sub-word units relating to a word of the vocabulary, and the sub-word models 132, describing sequences of acoustic references of the involved speech recognition unit. A word model composer 136 composes the word model based on the subword model 132 and the lexicon 134.

Figure 2A illustrates a word model 200 for a system based on whole-word speech recognition units, where the speech recognition unit of the shown word is modeled using a sequence of ten acoustic references (201 to 210). Figure 2B illustrates a word model 220 for a system based on sub-word units, where the shown word is modeled by a sequence of three sub-word models (250, 260 and 270), each with a sequence of four acoustic references (251, 252, 253, 254; 261 to 264; 271 to 274). The word models shown in Fig. 2 are based on Hidden Markov Models (HMMs), which are widely used to stochastically model speech signals. Using this model, each recognition unit (word model or subword model) is typically characterized by an HMM, whose parameters are estimated from a training set of data. For large vocabulary speech recognition systems usually a limited set of, for instance 40, sub-word units is used, since it would require a lot of training data to adequately train an HMM for larger units. An HMM state corresponds to an acoustic reference. Various techniques are known for modeling a reference, including discrete or continuous probability densities. Each sequence of acoustic references which relate to one specific utterance is also referred as an acoustic transcription of the utterance. It will be appreciated that, if other recognition techniques than HMMs are used, details of the acoustic transcription will be different.

A word level matching system 130 of Fig. 1 matches the observation vectors against all sequences of speech recognition units and provides the likelihoods of a match between the vector and a sequence. If sub-word units are used, constraints can be placed on the matching by using the lexicon 134 to limit the possible sequence of sub-word units to sequences in the lexicon 134. This reduces the outcome to possible sequences of words.

Furthermore a sentence level matching system 140 may be used which, based on a language model (LM), places further constraints on the matching so that the paths investigated are those corresponding to word sequences which are proper sequences as specified by the language model. As such the language model provides the second term $P(W)$ of equation (1). Combining the results of the acoustic model with those of the language model, results in an outcome of the unit matching subsystem 120 which is a recognized sentence (RS) 152. The language model used in pattern recognition may include syntactical and/or semantical constraints 142 of the language and the recognition task. A language model based on syntactical constraints is usually referred to as a grammar 144. The grammar 144 used by the language model provides the probability of a word sequence $W = w_1 w_2 w_{3...} w_q$, which in principle is given by:

$$P(W) = P(w_1)P(w_2|w_1).P(w_3|w_1w_2)...P(w_q| w_1w_2w_3...w_q).$$

Since in practice it is infeasible to reliably estimate the conditional word probabilities for all words and all sequence lengths in a given language, N-gram word models are widely used. In an N-gram model, the term $P(w_j| w_1w_2w_{3...}w_{j-1})$ is approximated by $P(w_j| w_{j-N+1...}w_{j-1})$. In practice, bigrams or trigrams are used. In a trigram, the term $P(w_j| w_1w_2w_{3...}w_{j-1})$ is approximated by $P(w_j| w_{j-2}w_{j-1})$.

The invention deals with spelling in a speech recognition system. In itself the speech recognition system may be a very limited (and simple) system which only works in a spelling mode, i.e. the user has to spell any spoken input to the system. The output of such a system can be the individual first characters of the spoken spell words or a word formed from the individual first characters of the spoken spell words. The recognition may be based on a small vocabulary recognition, if the number of spell words is relatively small. To increase the recognition, isolated word recognition may be used.

Normally, the spell mode recognition is in addition to a recognition mode wherein full words are identified. Such a mode is referred to as word mode recognition. In the word mode, normally a spoken word is represented in the corresponding full textual representation. Sometimes alternative textual representations are used. For instance, a spoken number (like "ten") may be represented as a digit sequence (like "10"). Similarly, spoken input like "el aye" may be represented in a short form as "LA" or in an expanded form as "Los Angeles". Normally, the word mode recognizer outputs a textual representation of the spoken input, in particular if the recognition system is used for dictation purposes (speech-to-text). For certain other applications it may be sufficient that the recognized full word is identified and it may not be required outputting the full textual representation. For instance, in certain dialogue systems it may be sufficient to output the identification (e.g. a number acting as an index in a list of possible words) where the same identification is used for completing the dialogue (e.g. by retrieving information in a database associated with the identification). For word mode recognition nowadays usually a continuous form of speech recognition is used, being small or large depending on the size of the vocabulary.

In a system with both a word mode and spell mode recognition, the spell mode is typically used in those cases where the full word recognition did not provide an accurate identification of the spoken full word. Such a use of the spell mode is, for instance, generally made in automatic dictation systems and in automatic dialogue systems. The spell mode recognizer translates a sequence of spoken spell words into a sequence of corresponding characters (one for each spell word). The character sequence is used for identifying the word the user intended to speak initially (normally the character sequence is simply taken as the full textual representation of the initially spoken word). In a system with both a spell mode and a word mode, typically recognition starts in the word mode as default. When the user observes a bad recognition, the user can trigger the system to switch to the spell mode. After the spelling has been completed, the recognition continues in the word mode. The systems may also detect that the recognition is bad (e.g. low scores or confidence measures or slow progress of a dialogue) and automatically switch to the spell mode (obviously also informing the user of this fact). In some situations the word mode and spell mode may be active in parallel. For instance, if there is no overlap in the multi-character spell words and the words in the dictation inventory the system can automatically show a single character if a spell word was recognized or a full word otherwise. In case of an overlap, the user may be prompted to indicate whether at that moment a single-character or a full-word transcription is desired.

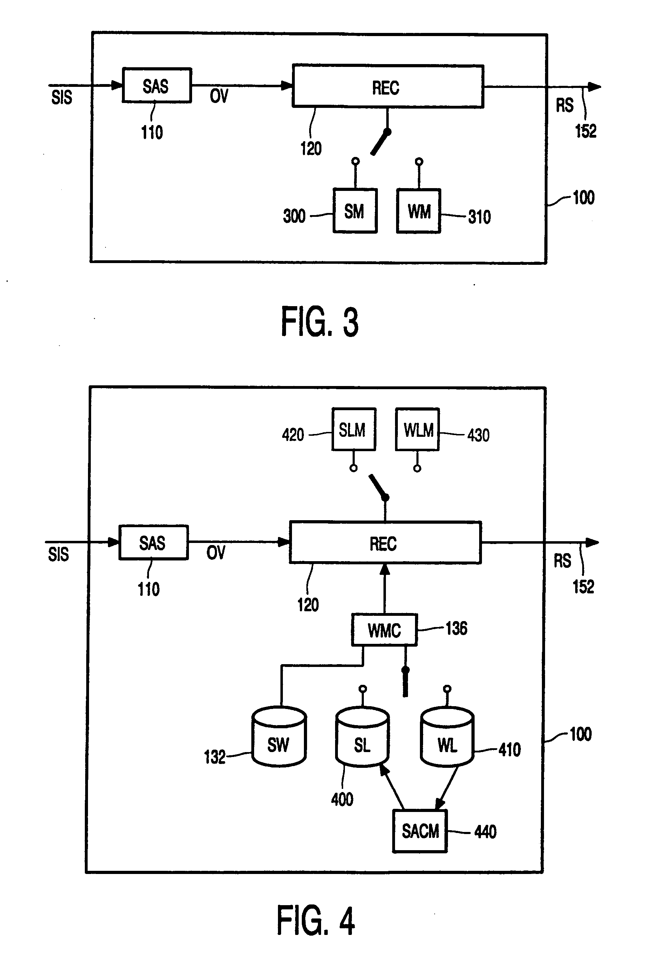

Figure 3 illustrates a block diagram of a speech recognition system capable of recognizing an input signal in a spell mode or a full word mode. To this end, the recognition engine 120 can switch between two sets of data. The first set 300 comprises the relevant data for the spell mode; the second set 310 for the word mode. The data specifies the models used for the recognition, such as the word model (acoustical representation, textual transcription) and the language model. Particularly, the word models can share many aspects.

Fig.4 illustrates a block diagram wherein word models for the spell mode and the word mode share the sub-word model 132 and the word model composer 136, which have already been described for Fig.1. The word models for the modes differ in the respective lexicons 400 and 410. In the example shown, separate language models are used with a language model 420 for the spell mode and a language model 430 for the word mode. For instance, the language model 430 may be optimized for continuous, large vocabulary speech, e.g. using bi-grams, whereas the spell mode language model may be optimized for isolated recognition, using unigrams.

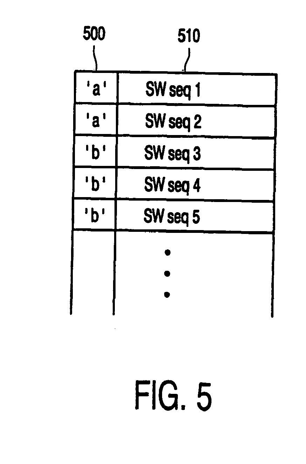

According to the invention, for the spell mode recognition a spell inventory is used with for each spellable character at least one spell reference words, to be spoken by a user. For at least one spellable character the spell inventory includes at least two multi-character spell reference words associated with a same single spellable character. For instance, the user may be allowed to spell the character 'a' by speaking the multi-character words 'Alpha', or 'Amsterdam'. Of course, spelling may also be possible by speaking the single-character word 'a'. Similarly, the spell character 'b' may be associated with the multi-character word 'Bravo' and 'Bernard', allowing the user to speak either word. Also more than two multi-character words may be associated with the same spell character. The person skilled in the art can easily ensure that more than one word is associated with the same spell character. Figure 5 illustrates an example of a lexicon structure for use with the system shown in Fig. 1. The lexicon comprises a table, where each table entry (row) corresponds to a speakable spell word. For each word, the first field 500 contains the spell character; the second field 510 identifies the acoustic transcription of the spell word. In Fig. 1 the acoustic transcription is given as a sequence of sub-word units. As such field 510 may contain a sequence of pointers to the involved sub-word units.

In an embodiment according to the invention, at least one of the multi-character spell reference words is selected from the dictation inventory, which is used for the word mode recognition. The word which is in common may be copied from the dictation inventory (lexicon) to the spell inventory, where the textual transcription may be different (single character versus full transcription). In this way parts which are in common (e.g. acoustical transcription) need to be specified or trained only once. The common parts may also be shared, e.g. by both copies pointing to a shared transcription (such as a sub-word sequence).

In an embodiment, the user can select which word(s) of the dictation inventory should be available for use as spell words as well. To this end, the system 100 comprises spell alphabet composition means 440 operative to, in response to user input, select at least one of the multi-character spell reference words from the dictation inventory. The composition means are shown in the exemplary system of Fig. 4.

As shown in Fig. 5, normally each spell reference word is associated with a single-character textual representation of the word. Alternatively, a spell reference word may be associated with a corresponding multi-character textual representation. In this way the same lexicon can be used, where possibly only a part of the lexicon is used for spelling. Which words of the lexicon can be used for spelling can simply be indicated. For instance the lexicon can be divided in two parts, where in the spell mode only a first part is used, whereas for the word mode recognition both parts are used. Alternatively, individual words may be marked to indicate in which mode the word may be recognized (e.g. using a one-bit indicator). Consequently, the word models can be shared to a high degree between the spell mode and word mode recognition.

Preferably, each multi-character spell reference words starts with its associated single spell character. This makes it easy to perform the spell mode recognition by using the word mode recognition (possibly with a specific spell mode lexicon with a restricted number of words) and in a post-processing step using extraction means for extracting a first character from the textual transcription of the recognized word. The extracted character is then used as the single character representing the spell word.

Normally a speech recognition system is implemented on a conventional computer, such as a PC or workstation. Increasingly, also portable equipment, such as PDAs, laptops or even telephones, are equipped with speech recognition. The functionality described by the invention is typically executed using the processor of the device, using conventional hardware, such as an audio card, for converting an analogue microphone signal into a digital data stream. If required also optimized hardware, such as DSPs, may be used for performing the speech recognition. The processor, such as a PC-type processor, micro-controller or DSP-like processor, can be loaded with a program to perform the steps according to the invention. The program is usually loaded from a background storage, such as a harddisk or ROM. A computer program product can be used, for instance, to initially store the program in the background storage. Such a product may be stored on a storage medium, like a CD-ROM, or may be distributed via a network, like Internet.

**Claims**

1. A speech recognition system (100) including:

   an input for receiving a signal representative of speech (SIS); and
   a recognition unit (120) for recognizing the signal and representing the recognized signal as one or a plurality of words; the recognition unit (120) including a spell mode recognizer for recognizing at least a part of the speech signal (SIS) by:

      - comparing the part of the signal (SIS) against a spell inventory (400) comprising a representation of a plurality of spell reference words; and
      - identifying for the part of the signal a single spell character associated with a most likely one of the spell reference words; and

   the recognition unit (120) includes a word mode recognizer for recognizing at least a further part of the speech signal (SIS) by:

      - comparing the further part of the signal against a dictation inventory comprising a representation of a plurality of dictation reference words; and
      - identifying for the further part of the signal a most likely one of the dictation reference words;

   the spell inventory (400) includes at least two multi-character spell reference words associated with a same single spell character;
   **characterized in that** at least one of the multi-character spell reference words is selected from the dictation inventory by spell alphabet composition means operative to, in response to user input, select at least one of the multi-character spell reference words from the dictation inventory.

2. A system as claimed in claim 1, wherein the set of spell reference words in the spell inventory substantially corresponds to the set of dictation reference words in the dictation inventory.

3. A system as claimed in claim 1, wherein each spell reference word which is selected from the dictation inventory shares an acoustic representation with a corresponding dictation reference word in the dictation inventory.

4. A system as claimed in claim 1, wherein each spell reference word is associated with a single-character textual representation of the word.

5. A system as claimed in claim 1, wherein each multi-character spell reference words starts with its associated single spell character.

6. A system as claimed in claim 1, wherein each multi-character spell reference is associated with a corresponding multi-character textual representation.

7. A system as claimed in claim 5 and 6, wherein the recognition unit includes a word mode recognizer for recognizing at least a further part of the speech signal by:

      - comparing the further part of the signal against a dictation inventory comprising a representation of a plurality of dictation reference words, each dictation reference word being associated with a textual representation of the word; and
- identifying for the further part of the signal a most likely one of the dictation reference words; and

wherein the spell mode recognizer is operative to use the word mode recognizer to transcribe the part of the signal to the textual transcription of the most likely spell reference word; and wherein the spell mode recognizer comprises extraction means for extracting a first character from the associated textual transcription and for using the extracted character as the single character representing the part of the signal.

8. A system as claimed in claim 7, wherein the spell mode recognizer is operative to use the word mode recognizer to operate in an isolated word recognition mode.

**Patentansprüche**

1. Spracherkennungssystem (100), das Folgendes umfasst:

   - einen Eingang zum Empfangen eines Sprache darstellenden Signals (SIS) und
   - eine Erkennungseinheit (120) zum Erkennen des Signals und Darstellen des erkannten Signals als eines einer Vielzahl von Wörtern, wobei die Erkennungseinheit (120) einen im Buchstabiermodus arbeitenden Erkenner umfasst zum Erkennen zumindest eines Teils des Sprachsignals (SIS) durch
   - Vergleichen des Teils des Signals (SIS) mit einem Buchstabierdatenbestand (400), der eine Darstellung einer Vielzahl von Buchstabierreferenzwörtern umfasst, und
   - Identifizieren für den Teil des Signals eines einzelnen Buchstabierzeichens, das einem der Buchstabierreferenzwörter mit der höchsten Wahrscheinlichkeit zugeordnet ist, und wobei
   - die Erkennungseinheit (120) einen im Wortmodus arbeitenden Erkenner umfasst zum Erkennen zumindest eines weiteren Teils des Sprachsignals (SIS) durch
   - Vergleichen des weiteren Teils des Signals mit einem Diktierdatenbestand, der eine Darstellung einer Vielzahl von Diktierreferenzwörtern umfasst, und
   - Identifizieren für den weiteren Teil des Signals eines der Diktierreferenzwörter mit der höchsten Wahrscheinlichkeit,

   wobei der Buchstabierdatenbestand (400) zumindest zwei aus mehreren Buchstaben bestehende Buchstabierreferenzwörter umfasst, die demselben einzelnen Buchstabierzeichen zugeordnet sind,
   **dadurch gekennzeichnet, dass** mindestens eines der aus mehreren Buchstaben bestehenden Buchstabierreferenzwörter aus dem Diktierdatenbestand von Mitteln zum Erstellen eines Buchstabieralphabets ausgewählt wird, die so funktionieren, dass sie als Reaktion auf eine Benutzereingabe mindestens eines der aus mehreren Buchstaben bestehenden Buchstabierreferenzwörter aus dem Diktierdatenbestand auswählen.

2. System nach Anspruch 1, wobei der Satz mit Buchstabierreferenzwörtern im Buchstabierdatenbestand im Wesentlichen dem Satz mit Diktierreferenzwörtern im Diktierdatenbestand entspricht.

3. System nach Anspruch 1, wobei jedes Buchstabierreferenzwort, das aus dem Diktierdatenbestand ausgewählt wird, eine akustische Darstellung mit einem entsprechenden Diktierreferenzwort im Diktierdatenbestand gemeinsam nutzt.

4. System nach Anspruch 1, wobei jedes Buchstabierreferenzwort einer aus einem einzelnen Buchstaben bestehenden Textdarstellung des Wortes zugeordnet wird.

5. System nach Anspruch 1, wobei jedes aus mehreren Buchstaben bestehende Buchstabierreferenzwort mit seinem zugeordneten einzelnen Buchstabierzeichen beginnt.

6. System nach Anspruch 1, wobei jedes aus mehreren Buchstaben bestehende Buchstabierreferenzwort einer entsprechenden aus mehreren Buchstaben bestehenden Textdarstellung zugeordnet wird.

7. System nach den Ansprüchen 5 und 6, wobei die Erkennungseinheit einen im Wortmodus arbeitenden Erkenner umfasst zum Erkennen zumindest eines weiteren Teils des Sprachsignals durch

- Vergleichen des weiteren Teils des Signals mit einem Diktierdatenbestand, der eine Darstellung einer Vielzahl von Diktierreferenzwörtern umfasst, wobei jedes Diktierreferenzwort einer Textdarstellung des Wortes zugeordnet ist, und

- Identifizieren für den weiteren Teil des Signals eines Diktierreferenzwortes mit der höchsten Wahrscheinlichkeit und

wobei der im Buchstabiermodus arbeitende Erkenner so funktioniert, dass er den im Wortmodus arbeitenden Erkenner verwendet, um den Teil des Signals in die Texttranskription des Buchstabierreferenzwortes mit der höchsten Wahrscheinlichkeit umzusetzen, und wobei der im Buchstabiermodus arbeitende Erkenner Extraktionsmittel zum Extrahieren eines ersten Buchstabens aus der zugeordneten Texttranskription und zum Verwenden des extrahierten Buchstabens als den einzelnen, den Teil des Signals darstellenden Buchstaben umfasst.

8. System nach Anspruch 7, wobei der im Buchstabiermodus arbeitende Erkenner so funktioniert, dass er den im Wortmodus arbeitenden Erkenner nutzt, um in einem Erkennungsmodus für isolierte Wörter zu arbeiten.


**Revendications**

1. Système de reconnaissance vocale (100), comprenant :

une entrée destinée à recevoir un signal représentatif de la parole (SIS), et
une unité de reconnaissance (120) destinée à reconnaître le signal et représentant le signal reconnu sous la forme d'un mot ou d'une pluralité de mots; l'unité de reconnaissance (120) comportant un dispositif de reconnaissance en mode d'épellation destiné à reconnaître au moins une partie du signal vocal (SIS) en :

- comparant la partie du signal (SIS) avec un inventaire d'épellation (400) incluant une représentation d'une pluralité de mots de référence d'épellation, et
- identifiant, pour la partie du signal, un caractère d'épellation unique associé à un mot le plus probable parmi les mots de référence d'épellation,

l'unité de reconnaissance (120) comportant un dispositif de reconnaissance en mode par mot destiné à reconnaître au moins une partie supplémentaire du signal vocal (SIS) en :

- comparant la partie supplémentaire du signal (SIS) avec un inventaire de dictée incluant une représentation d'une pluralité de mots de référence de dictée, et
- identifiant, pour la partie supplémentaire du signal, un mot le plus probable parmi les mots de référence de dictée;

l'inventaire d'épellation (400) comprenant au moins deux mots de référence d'épellation à plusieurs caractères associés à un même caractère d'épellation unique;

**caractérisé en ce qu'**au moins un des mots de référence d'épellation à plusieurs caractères est sélectionné parmi l'inventaire de dictée par des moyens de composition d'alphabet d'épellation pouvant fonctionner, en réaction à une entrée d'utilisateur, pour sélectionner au moins un mot parmi les mots de référence d'épellation à plusieurs caractères provenant de l'inventaire de dictée.

2. Système suivant la revendication 1, dans lequel le jeu de mots de référence d'épellation dans l'inventaire d'épellation correspond sensiblement au jeu de mots de référence de dictée dans l'inventaire de dictée.

3. Système suivant la revendication 1, dans lequel chaque mot de référence d'épellation sélectionné dans l'inventaire de dictée partage une représentation acoustique avec un mot de référence de dictée correspondant dans l'inventaire de dictée.

4. Système suivant la revendication 1, dans lequel chaque mot de référence d'épellation est associé à une représentation textuelle à caractère unique du mot.

5. Système suivant la revendication 1, dans lequel chaque mot de référence d'épellation à plusieurs caractères commence par son caractère d'épellation unique associé.

**6.** Système suivant la revendication 1, dans lequel chaque mot de référence d'épellation à plusieurs caractères est associé à une représentation textuelle à plusieurs caractères correspondante.

**7.** Système suivant les revendications 5 et 6, dans lequel l'unité de reconnaissance comprend un dispositif de reconnaissance en mode par mot destiné à reconnaître au moins une partie supplémentaire du signal vocal en :

> comparant la partie supplémentaire du signal avec un inventaire de dictée incluant une représentation d'une pluralité de mots de référence de dictée, chaque mot de référence de dictée étant associé à une représentation textuelle du mot, et
> identifiant, pour la partie supplémentaire du signal, un mot le plus probable parmi les mots de référence de dictée;

dans lequel le dispositif de reconnaissance en mode d'épellation peut fonctionner de manière à utiliser le dispositif de reconnaissance en mode par mot pour transcrire la partie du signal en la transcription textuelle du mot de référence d'épellation le plus probable, et dans lequel le dispositif de reconnaissance en mode d'épellation comprend des moyens d'extraction destinés à extraire un premier caractère de la transcription textuelle associée et à utiliser le caractère extrait comme étant le caractère unique représentant la partie du signal.

**8.** Système suivant la revendication 7, dans lequel le dispositif de reconnaissance en mode d'épellation peut fonctionner de manière à utiliser le dispositif de reconnaissance en mode par mot pour fonctionner en mode de reconnaissance de mot isolée.

FIG. 1

FIG. 2a

FIG. 2b

FIG. 3

FIG. 4

500        510

| | |
|---|---|
| 'a' | SW seq 1 |
| 'a' | SW seq 2 |
| 'b' | SW seq 3 |
| 'b' | SW seq 4 |
| 'b' | SW seq 5 |
| | • • • |

# FIG. 5

**EP 1 135 768 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5754974 A